# EUROPÄISCHE PATENTSCHRIFT

(11) **EP 1 478 967 B1**
(45) Veröffentlichungstag und Bekanntmachung des Hinweises auf die Patenterteilung: **02.05.2007**
(21) Anmeldenummer: 03709706.0
(22) Anmeldetag: 14.02.2003
(51) Int. Cl.: G02C 5/22

(54) **FEDERSCHARNIER FÜR BRILLEN**
SPRING HINGE FOR GLASSES
CHARNIERE A RESSORT POUR DES LUNETTES

(30) Priorität: 22.02.2002 DE 10208584; 19.07.2002 DE 10234209
(43) Veröffentlichungstag der Anmeldung: 24.11.2004
(73) Patentinhaber: OBE Ohnmacht & Baumgärtner GmbH & Co. KG, 75228 Ispringen (DE); Ching Lan Co., Ltd., Taipei (TW)
(72) Erfinder: CHANG, Lien Fon, Taipei (TW)
(74) Vertreter: Gleiss, Alf-Olav
(86) Internationale Anmeldenummer: PCT/EP2003/001489
(87) Internationale Veröffentlichungsnummer: WO 2003/071338

(56) Entgegenhaltungen:
- EP-A- 0 003 928
- EP-A- 0 615 149
- EP-A- 1 059 552
- WO-A-01/04689
- WO-A-97/45764
- DE-U- 9 306 387
- FR-A- 2 793 323
- US-A- 4 991 258

## Beschreibung

Die Erfindung betrifft ein Federscharnier für Brillen mit einem Mittelteil und mit Bügeln gemäß Oberbegriff des Anspruchs 1.

Federscharniere der hier angesprochenen Art sind bekannt. Sie dienen dazu, das mit den Brillengläsern versehene Mittelteil einer Brille nachgiebig federnd mit den Bügeln zu verbinden. Diese können aus einer ersten am Mittelteil anliegenden Funktionsstellung in eine zweite etwa rechtwinklig zum Mittelteil verlaufenden Funktionsstellung verlagert werden. Werden die Bügel über die zweite Funktionsstellung hinaus nach außen verschwenkt, wird eine Federeinrichtung im Federscharnier aktiviert, die die Bügel in die zweite Funktionsstellung zurückzieht. Zur Verbesserung der Nutzung der Brille können die Bügel zum Aufsetzen über die zweite Funktionsstellung hinaus nach außen verschwenkt und damit überdrückt werden. Dadurch wird die Federeinrichtung des Federscharniers aktiviert und zwar so, dass die Bügel in die zweite Stellung zurückgezogen werden. Die Federeinrichtung bewirkt damit auch, dass die Bügel beim Tragen der Brille gegen den Kopf des Benutzers angedrückt werden, so dass die Brille sicheren Halt findet.

Beim Überdrücken der Bügel wird die Federeinrichtung aktiviert, wobei das Scharnierelement etwas aus dem Gehäuse des Federscharniers gegen die Rückstellkraft der Federeinrichtung nach außen gezogen wird. Diese Verlagerung des Scharnierelements bedarf einer Führung. Bei herkömmlichen Federscharnieren ist das Scharnierelement gemeinsam mit der Federeinrichtung in eine Ausnehmung eingesetzt, die in das Gehäuse eingebracht ist (FR-A-2 793 323; WO 0104689A; DE 93 06 387 U; EP 0 615 149 A1). Bereiche der Ausnehmung wirken so mit dem Scharnierelement zusammen, dass ein Führungsbereich gebildet wird. Dieser dient dazu, bei einer Verlagerung des Scharnierelements dieses sicher zu führen und zu verhindern, dass eine Relativdrehung zwischen Gehäuse und Scharnierelement eintritt. Die Ausnehmung, die einerseits die Federeinrichtung und das Scharnierelement aufnimmt und andererseits Führungsbereiche aufweist, muss relativ lang ausgebildet werden, um die Führungsbereiche dort realisieren zu können, wo die Federeinrichtung nicht vorhanden ist. Über die Länge der Ausnehmung gesehen gibt es also Abschnitte, in denen die Federeinrichtung angeordnet ist und weitere Abschnitte, die den Führungsbereich bilden.

Federscharniere sollen vorzugsweise immer häufiger eingesetzt werden, um den Tragekomfort der Brillen zu erhöhen. Da die Brillengestelle bei einigen Modellen sehr filigran ausgebildet sind, müssen die Federscharniere sehr klein sein. Die Tatsache, dass die Ausnehmung im Gehäuse Abschnitte für die Federeinrichtung und für den Führungsbereich aufweisen muss, erzwingen eine relativ lange Bauform des Gehäuses und damit des Federscharniers. Damit ist dieses in einigen Fällen nicht einsetzbar.

Aufgabe der Erfindung ist es daher, ein Federschamier für Brillen zu schaffen, das diesen Nachteil nicht aufweist.

Zur Lösung dieser Aufgabe wird ein Federscharnier vorgeschlagen, das die in Anspruch 1 genannten Merkmale aufweist. Es zeichnet sich unter anderem dadurch aus, dass zumindest ein Abschnitt des Führungsbereichs außerhalb der Ausnehmung anordenbar ist, die die Federeinrichtung und Teile des Schamierelements aufnimmt. Die Ausnehmung kann damit kürzer ausgebildet werden, so dass das Federscharnier insgesamt kürzer wird.

Bevorzugt wird ein Ausführungsbeispiel des Federscharniers, das sich dadurch auszeichnet, dass zumindest ein Abschnitt des Führungsbereichs seitlich versetzt zur Federeinrichtung angeordnet ist. Der Führungsbereich schließt sich also nicht -in Längsrichtung des Federschamiers gesehen- an die Federeinrichtung an, so dass die Bauform des Federscharniers reduziert ist.

Besonders bevorzugt wird ein Ausführungsbeispiel des Federscharniers, bei dem der Führungsbereich vollständig außerhalb der Ausnehmung anordenbar ist. Diese muss also nur noch so lang sein, dass sie gerade die Federeinrichtung aufnimmt. Dies führt zu einem extrem kurzen Federscharnier, das sehr universell einsetzbar ist. Es ist damit möglich, das Federschamier sowohl auf den Bügel als auch im Bereich des Mittelteils einer Brille einzusetzen.

Weitere Ausgestaltungen ergeben sich aus den übrigen Unteransprüchen.

Die Erfindung wird im Folgenden anhand der Zeichnung näher erläutert. Es zeigen:
- Figur 1: einen Teillängsschnitt durch ein erstes Ausführungsbeispiel eines Federscharniers in einer ersten Funktionsstellung;
- Figur 2: einen Teillängsschnitt durch das in Figur 1 dargestellte Ausführungsbeispiel in einer zweiten Funktionsstellung;
- Figur 3: eine perspektivische Darstellung eines zweiten Ausführungsbeispiels eines Federscharniers;
- Figur 4: ein Scharnierelement mit einer Federeinrichtung;
- Figur 5: eine Seitenansicht eines abgewandelten Ausführungsbeispiels eines Federscharniers ähnlich dem in Figur 3;
- Figur 6: einen Teillängsschnitt durch ein Federscharnier, das nicht zur Erfindung gehört;
- Figur 7: eine Draufsicht auf die Stirnseite des Gehäuses des in Figur 6 dargestellten Federscharniers;
- Figur 8: einen Teillängsschnitt durch ein weiteres Ausführungsbeispiel eines Federscharniers;
- Figur 9: eine Draufsicht auf die Stirnseite des Gehäuses des Federscharniers gemäß Figur 8;
- Figur 10: einen Teillängsschnitt durch ein weiteres Ausführungsbeispiel eines Federscharniers;
- Figur 11: eine Ansicht eines Verriegelungselements;
- Figur 12: einen Teillängsschnitt durch ein weiteres Ausführungsbeispiel eines Federscharniers;
- Figur 13: eine Seitenansicht eines nicht zur Erfindung gehörenden Federscharniers in einer Funktionsstellung, die der in Figur 2 gezeigten entspricht;
- Figur 14: eine Seitenansicht des aus Figur 13 ersichtlichen Scharnierelements;
- Figur 15: eine Seitenansicht des in Figur 13 dargestellten Scharnierteils;
- Figur 16: eine Explosionsdarstellung des in Figur 13 dargestellten Federscharniers in Seitenansicht;
- Figur 17: eine Draufsicht auf das in Explosionsdarstellung wiedergegebenen Federschamiers gemäß Figur 13;
- Figur 18: eine Seitenansicht eines nicht zur Erfindung gehörenden Federscharniers in einer Funktionsstellung gemäß Figur 2;
- Figur 19: das Scharnierelement des in Figur 18 dargestellten Federscharniers in Seitenansicht;
- Figur 20: das Scharnierteil des in Figur 18 dargestellten Federschamiers in Seitenansicht;
- Figur 21: eine Explosionsdarstellung des Scharnierelements gemäß Figur 19 in Draufsicht;
- Figur 22: ein Teilelement des in Figur 21 dargestellten Scharnierelements;
- Figur 23: eine Explosionsdarstellung des in Figur 19 wiedergegebenen Schamierelements in Seitenansicht und
- Figur 24: das in Figur 22 dargestellte Teilelement in Seitenansicht.

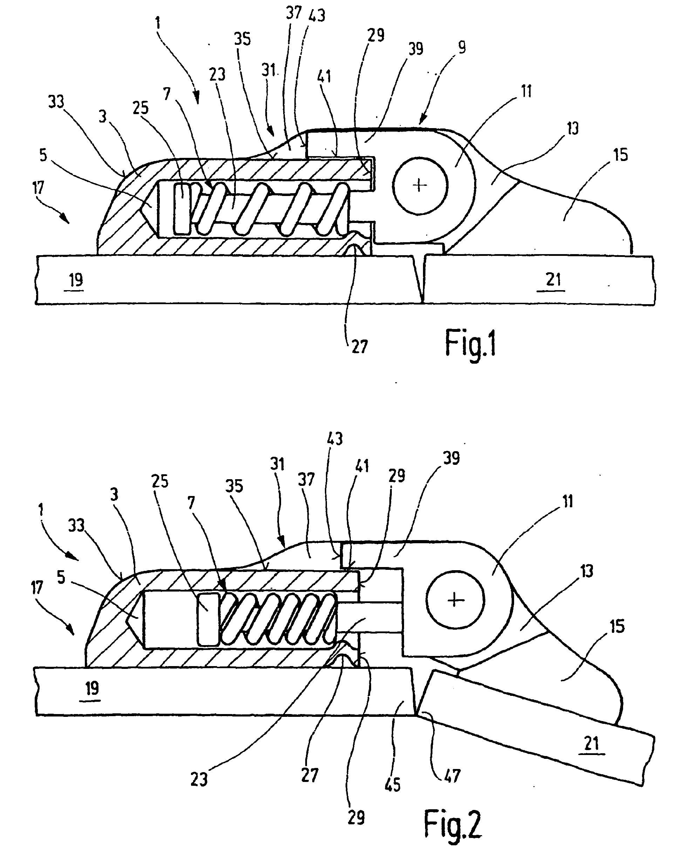

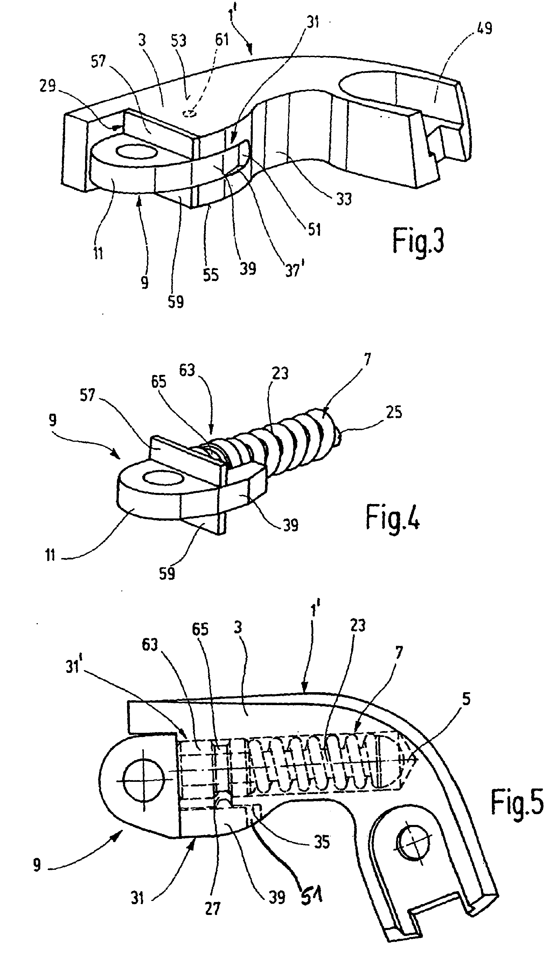

Das in Figur 1 dargestellte Ausführungsbeispiel des Federscharniers 1 weist ein Gehäuse 3 auf, das im Längsschnitt dargestellt ist. Im Inneren des Gehäuses ist eine Ausnehmung 5 vorgesehen, beispielsweise eine Bohrung, die eine Federeinrichtung 7 und zumindest teilweise- ein Scharnierelement 9 aufnimmt. Der aus der Ausnehmung 5 herausragende Teil des Scharnierelements 9 ist mit einem Scharnierauge 11 versehen, das mit einem Scharnierauge 13 eines Scharnierteils 15 zusammenwirkt. Die Augen der Scharnieraugen liegen fluchtend übereinander und werden auf geeignete Weise, vorzugsweise durch spezielle Schrauben, die gegen Lösen gesichert sind, miteinander verdrehbar verbunden. Von der Brille 17 sind hier nur Teile dargestellt. Beispielsweise wird hier davon ausgegangen, dass das Gehäuse 3 auf einem Bügel 19 der Brille 17 aufgesetzt ist und das Scharnierteil 15 auf dem Mittelteil 21 der Brille 17.

Die Federeinrichtung 7 weist hier eine Schraubenfeder auf, die einen Teil des Scharnierelements 9, der hier als Stift 23 ausgebildet ist, umgibt. An den dem Scharnierauge 11 gegenüberliegenden Ende ist der Stift 23 mit einer Sicherung 25 versehen, die ein Abrutschen der Schraubenfeder verhindert. Die Sicherung kann beispielsweise durch eine Stauchung oder Quetschung des Endes des Stifts 23 realisiert werden oder aber auf andere bekannte Weise, beispielsweise durch einen Kopf einer Schraube, die in das Scharnierauge 11 eingeschraubt ist.

Die lichte Weite der Ausnehmung 5 ist so gewählt, dass die Federeinrichtung 7 praktisch reibungsfrei im Inneren des Gehäuses 3 unterbringbar ist und die Sicherung 25 nicht an der Wandung der Ausnehmung 5 anliegt. Um ein Herausziehen der Federeinrichtung 7 beziehungsweise des Scharnierelements 9 aus der Ausnehmung 5 des Gehäuses 3 zu vermeiden, ist eine geeignete Fixierung vorgesehen, hier eine Sicke 27. Das heißt, die Wandung des Gehäuses 3 ist bereichsweise nach innen in Richtung der Ausnehmung 5 eingedrückt, so dass die lichte Weite der Ausnehmung 5 in diesem Bereich reduziert ist. Dadurch kann die in das Gehäuse 3 eingesetzte Federeinrichtung 7 nicht mehr aus der Ausnehmung 5 herausgezogen werden.

Das Federscharnier 1 ist in Figur 1 in einer ersten Funktionsstellung dargestellt. Der Bügel 19 wurde aus einer Ruheposition, an der er am Mittelteil 21 mehr oder weniger anlag, in die Trageposition verlagert, in der der Bügel 19 gegenüber den Brillengläsern etwa 90° verläuft. In dieser Funktionsstellung liegt das Scharnierauge 11 an der dem Scharnierauge zugewandten Stirnseite des Gehäuses 3 an; die Federeinrichtung 7 beziehungsweise deren Schraubenfeder ist nur minimal vorgespannt.

Auf der Außenseite des Gehäuses 3 findet sich ein Führungsbereich 31 für das Scharnierelement 9. Beispielsweise ist hier in die Außenfläche 33 eine Nut eingebracht, die einen Boden 35 und mindestens eine Seitenfläche 37 aufweist. Der Führungsbereich weist damit zwei Abschnitte auf, die der Führung des Scharnierelements 9 dienen, nämlich den Boden 35 und die Seitenfläche 37.

Das Scharnierelement 9 ist mit einem Vorsprung 39 versehen, der hier vom Scharnierauge 11 ausgeht und von dort in dieselbe Richtung verläuft, wie der Stift 23. Damit liegt der Vorsprung 39 in der Nut, die von dem Boden 35 und der mindestens einen Seitenfläche 37 begrenzt wird. Die dem Stift 23 zugewandte Unterseite 41 des Vorsprungs 39 bildet damit ebenfalls einen Abschnitt des Führungsbereichs 31, der mit dem Boden 35 der Nut zusammenwirkt. Die dem Betrachter abgewandte Seitenfläche des Vorsprungs 39 bildet ihrerseits einen Abschnitt des Führungsbereichs 31, der mit der Seitenfläche 37 der Nut zusammenwirkt.

Die Tiefe der Nut beziehungsweise die vom Boden 35 aus gemessene Höhe der Seitenfläche 37 ist so auf die Höhe des Vorsprungs 39 abgestimmt, dass der Vorsprung vollständig in der Nut verschwindet und damit eine flächige Außenseite des Gehäuses 3 auch im Führungsbereich 31 realisiert ist. Die Außenfläche 33 kann links von der Stirnseite 43 des Vorsprungs 39 abfallen, um dem Gehäuse 3 ein gefälliges Äußeres zu geben.

Es ist auch möglich, die Nut auf der Oberseite zu verschließen beziehungsweise abzudecken, also das Gehäuse quasi mit zwei parallel zueinander verlaufenden Ausnehmungen zu versehen, wobei die Ausnehmung 5 der Aufnahme der Federeinrichtung 7 und Teilen des Scharnierelements 9 dient und die dazu parallel verlaufende Ausnehmung der Aufnahme des Vorsprungs 39.

Die Sicke 27 ist hier auf der Unterseite des Gehäuses 3 vorgesehen, mit der das Gehäuse 3 auf dem Bügel 19 aufliegt. Das Federscharnier 1 wird also vor der Anbringung am Bügel 19 vormontiert. Um die Federeigenschaften der Federeinrichtung nicht zu beeinträchtigen, wird das Gehäuse 3 vorzugsweise durch Elektroschweißen auf dem Bügel 19 angebracht. Dazu können auf der Unterseite des Gehäuses 3 auf bekannte Weise sogenannte Schweißwarzen vorgesehen werden, die bei Durchleitung eines elektrischen Stroms durch das Gehäuse 3 in den Bügel 19 schmelzen und damit eine sichere Verbindung zwischen Gehäuse und Bügel ergeben. Das Gehäuse 3 wird beim Elektroschweißen fest auf den Bügel 19 aufgedrückt. Die Schweißwarzen schmelzen sehr schnell, so dass eine nachhaltige Erwärmung der Federeinrichtung beziehungsweise deren Schraubenfeder ausgeschlossen ist. Die Federeigenschaften bleiben also unbeeinträchtigt.

Das Scharnierteil 15 kann, da hier keine Feder vorgesehen ist, auch auf das Mittelteil 21 aufgelötet werden. Aber auch hier ist selbstverständlich ein Elektroschweißen möglich.

Figur 2 zeigt das in Figur 1 dargestellte Federscharnier 1 in einer zweiten Funktionsstellung. Gleiche Teile sind mit gleichen Bezugsziffern versehen, so dass auf die Beschreibung zu Figur 1 verwiesen wird.

Hier ist der Bügel 19 gegenüber dem Mittelteil 21 überdrückt, also über die Trageposition hinaus nach außen verschwenkt. Auf bekannte Weise wirken die äußeren Kanten 45 und 47 von Bügel 19 und Mittelteil 21 so miteinander, dass das Scharnierelement 9 gegen die Kraft der Federeinrichtung 7 aus der Ausnehmung 5 des Gehäuses 3 herausgezogen wird, wobei die Federeinrichtung 7 aktiviert beziehungsweise die Schraubenfeder komprimiert wird. Durch die Sicke 27 kann, wie gesagt, die Federeinrichtung 7 nicht aus der Ausnehmung 5 des Gehäuses 3 herausgezogen werden. Die Federeinrichtung wird also zwischen der Sicke 7 und der Sicherung 25 eingespannt und komprimiert. Durch die Federeinrichtung 7 wird eine nach links gerichtete Rückstell- beziehungsweise Zugkraft auf den Stift 23 ausgeübt, so dass das Scharnierauge 11 zum Gehäuse 5 zurückgezogen wird. Dies führt zu einer Rückverlagerung von Bügel 19 und Mittelteil 21 in die erste Funktionsstellung gemäß Figur 1.

Die Rückstellwirkung des Federscharniers 1 ist grundsätzlich bekannt, so dass hier nicht näher darauf eingegangen zu werden braucht.

Es sei hier noch darauf hingewiesen, dass das Gehäuse 3 des Scharnierelements 9 bei entsprechender Auslegung der Brille 17 auch auf dem Mittelteil angeordnet sein kann. Das Scharnierteil 15 ist dann am Bügel befestigt.

Aus den Darstellungen in den Figuren 1 und 2 wird deutlich, dass der Stift 23 im Inneren des Gehäuses 3, also in der Ausnehmung 5 praktisch ungeführt verläuft und dass die Führung des Scharnierteils 9 hier durch den Führungsbereich 31 realisiert wird, der außerhalb der Ausnehmung 5 vorgesehen ist. Hier ist der Führungsbereich 31 vollständig getrennt ausgebildet von der Ausnehmung 5. Die Länge der Ausnehmung 5 muss also nur so dimensioniert werden, dass hier die Federeinrichtung 7 untergebracht werden kann. In Längsrichtung der Ausnehmung bedarf es also keiner Führungsflächen, die die Gesamtlänge des Gehäuses 3 vergrößern würden.

Das hier dargestellte Federscharnier zeichnet sich also dadurch aus, dass die Baulänge ausgesprochen kurz ist. Insbesondere diese Tatsache führt dazu, dass das Federscharnier 1 wahlweise auf dem Mittelteil 21 oder dem Bügel 19 der Brille 17 angeordnet sein kann. Wird in die Außenfläche 33 des Gehäuses 3 eine Nut eingebracht, deren Boden 35 beidseitig von Seitenflächen umgeben ist, von denen hier die Seitenfläche 37 dargestellt ist, so wirkt der Führungsbereich 31 nicht nur zur Führung des Scharnierelements 9 bei dessen Verlagerung in Längsrichtung der Ausnehmung 5 sondern auch als eine Relativdrehung zwischen Scharnierelement 9 und Gehäuse 3 verhindernde Verdrehsicherung und als Stabilisierung. Da der Vorsprung 39 in Längsrichtung des Gehäuses 3 einen Bereich des Bodens 35 überspannt, wird auch ein Verkippen des Scharnierelements 9 um eine senkrecht zur Bildebene stehende Schwenkachse sehr weitgehend reduziert beziehungsweise verhindert.

Figur 3 zeigt ein zweites Ausführungsbeispiels eines Federscharniers 1'. Gleiche Teile sind mit gleichen Bezugsziffern versehen, so dass auf die Beschreibung zu den vorangegangenen Figuren verwiesen wird.

Figur 3 zeigt ein Federscharnier, dessen Gehäuse 3 durch ein gebogenes Teil des Brillengestells gebildet wird. Es wird hier davon ausgegangen, dass das Gehäuse 3 zum Mittelteil 21 einer Brille gehört. Das hier dargestellte Element des Brillengestells ist etwa rechtwinkelig gebogen. Am rechten Ende des Elements ist eine Vertiefung 49 vorgesehen, an der das Mittelteil der hier nicht weiter dargestellten Brille angesetzt werden kann. Die Art der Anbringung des Elements am Mittelteil ist aber für die Funktion des Federscharniers 1' nicht von Bedeutung.

Deutlich zu sehen ist hier das Scharnierauge 11 des Scharnierelements 9. Vom Scharnierauge 11 geht ein Vorsprung 39 aus, der in einer Nut 51 untergebracht ist, die beidseitig von Seitenflächen begrenzt wird. Hier ist ein Teil der Seitenfläche 37' zu erkennen, die einen Abschnitt des Führungsbereichs 31 bildet und mit einer Seitenfläche des Vorsprungs 39 zusammenwirkt. Die Tiefe der Nut 51 ist so gewählt, dass der Vorsprung 39 nicht über die Außenfläche 33 des Gehäuses 3 übersteht.

Das Scharnierauge 11 ist hier mittig bezüglich zweier Seitenwangen 53 und 55 des Gehäuses 3 angeordnet. An einem hier nicht dargestellten Scharnierteil, das in den Figuren 1 und 2 mit der Bezugsziffer 15 versehen war, sind bei einer derartigen Ausgestaltung des Federscharniers 1 vorzugsweise zwei in einem Abstand zueinander liegende Scharnieraugen vorgesehen, zwischen denen das Scharnierauge 11 des Scharnierelements 9 zu liegen kommt. Die Anzahl der Scharnieraugen am Scharnierteil 15 ist in Abhängigkeit von der gewünschten Stabilität der Scharnierverbindung wählbar. Es ist also möglich, sowohl am Scharnierelement als auch am Scharnierteil jeweils nur ein Scharnierauge vorzusehen. Die Scharnieraugen des hier nicht dargestellten Scharnierteils weisen keine kreisrunde Außenkontur auf, sie sind vielmehr auf bekannte Weise mit Nasen versehen, die auf der Stirnseite 29 des Gehäuses 3 entlang gleiten. Hier sind rechts und links von dem Scharnierauge 11 Materialstreifen 57 und 59 vorgesehen, die jeweils eine Lauffläche für derartige Nasen bilden. Die Laufflächen reduzieren den Verschleiß, der durch die Schwenkbewegung gegeben ist, insbesondere wenn das Gehäuse 3 und die Scharnieraugen des Scharnierteils 15 aus einem Material mit schlechten Gleiteigenschaften bei einer Materialpaarung bestehen, beispielsweise aus Titan.

Das Scharnierelement 9 ist unmittelbar in das Gehäuse 3 eingesetzt, das durch das Element des Brillengestells gebildet wird. Die Fixierung der Federeinrichtung 7 kann wiederum durch eine Sicke erfolgen, die hier durch einen gestrichelten Kreis 61 angedeutet ist. Die Sicke kann auch auf der hier nicht sichtbaren, dem Vorsprung 39 abgewandten Rückseite des Gehäuses 3 vorgesehen werden.

Figur 4 zeigt das Scharnierelement 9 in perspektivischer Ansicht. Gleiche Teile sind mit gleichen Bezugsziffern versehen, so dass auf die Beschreibung zu den vorangegangen Figuren verwiesen wird.

Das Scharnierelement 9 weist ein Scharnierauge 11 auf, von dem der Vorsprung 39 entspringt, außerdem einen Stift 23, der im Wesentlichen parallel zum Vorsprung 39 verläuft und der im Inneren des Gehäuses 3 zu liegen kommt. Die Federeinrichtung 7 ist hier wiederum als Schraubenfeder ausgebildet, die den Stift 23 umgibt. An dessen dem Scharnierauge 11 abgewandten Ende findet sich wiederum eine Sicherung 25, die ein Abrutschen der Schraubenfeder verhindert, so dass diese zwischen dem Scharnierauge 11 und der Sicherung 25 eingespannt ist. Hier liegt die Schraubenfeder nicht unmittelbar an dem Scharnierauge 11 an, sondern an einem Ring 63, in dessen Außenfläche eine umlaufende Nut 65 eingebracht ist. In diese greift die Sicke ein, die durch den Kreis 61 angedeutet ist. Dadurch wird der Ring 63 sicher in der hier nicht dargestellten Ausnehmung 5 des Gehäuses 3 gehalten; ein Herausziehen der Federeinrichtung 7 beziehungsweise des Scharnierelements 9 wird sicher vermieden.

Bei dem hier dargestellten Ausführungsbeispiel sind an dem Ring 63 die Materialstreifen 57 und 59 vorgesehen, die im Wesentlichen senkrecht zur Längsausdehnung des Stifts 23 und damit zur Bewegungsrichtung des Scharnierelements 9 im Inneren des Gehäuses 3 verlaufen. Sie dienen einerseits, wie gesagt, als Lauffläche für Nasen an den Scharnieraugen des Scharnierteils, andererseits auch dazu, die Ausnehmung 5 im Gehäuse 3 sicher zu verschließen und damit vor Verschmutzung zu schützen.

Figur 5 zeigt ein Federscharnier 1', das gegenüber dem in Figur 3 leicht abgewandelt ist. Gleiche Teile sind mit gleichen Bezugsziffern versehen, so dass insofern auf die Beschreibung zu Figur 3 verwiesen wird.

Das Gehäuse 3 des Federscharniers 1' ist wiederum ein Element eines Brillengestells, in dessen Inneren eine hier gestrichelt dargestellte Ausnehmung 5 vorgesehen ist, die eine Federeinrichtung 7 mit einer Schraubenfeder aufnimmt, die um einen Stift 23 des Scharnierelements 9 verläuft. Um den Stift 23 ist auch hier ein Ring 63 gelegt, der eine umlaufende Nut 65 in seiner Außenfläche aufweist. In diese greift eine Sicke 27 ein, die vom Boden 35 einer Nut 51 aus in das Gehäuse 3 eingebracht ist, und damit den Ring 63 gegen Herausziehen aus der Ausnehmung 5 sichert. Damit ist auch das Scharnierelement 9 sicher in der Ausnehmung 5 gehalten.

Die Sicke 27 ist so angeordnet, dass sie in der hier dargestellten Funktionsstellung des Federscharniers 1', in der das Scharnierelement 9 nicht aus der Ausnehmung 5 herausgezogen ist, von dem Vorsprung 39 vollständig verdeckt ist. Damit ergeben sich optimale optische Eigenschaften des Federscharniers 1'. Die Sicke 27 ist nur in den Fällen sichtbar, wenn auch nur am Grund der Nut, wenn das Scharnierelement 9, wie in Figur 2 dargestellt, aus dem Gehäuse 3 teilweise herausgezogen ist.

Die in das Gehäuse 3 eingesetzten Teile sind hier gestrichelt dargestellt. Es ist deutlich erkennbar, dass die Länge der Ausnehmung 5 so gewählt ist, dass einerseits die als Schraubenfeder ausgebildete Federeinrichtung 7 und andererseits der Ring 63 von der Ausnehmung 5 aufgenommen werden. Die Länge der

Ausnehmung 5 wird also von der Gesamtlänge des Rings und der Federeinrichtung bestimmt. Das Gehäuse 3 ist damit insgesamt - in Richtung des Stifts 23 gesehen - länger als das in den Figuren 1 und 2 gezeigte Federscharnier 1.

Der Ring 63 kann hier einen Teil eines Führungsbereichs 31' ausmachen. Im Übrigen ist auch hier, wie bei den vorangegangenen Ausführungsbeispielen im Bereich des Vorsprungs 39 und der zugehörigen Nut 51 der Führungsbereich 31 realisiert, wie dies anhand der vorangegangenen Figuren erläutert wurde. Das Gehäuse 3 wird also durch den Ring 63 länger. Es ist aber möglich, im Inneren des Gehäuses, also im Bereich der Ausnehmung 5 den zusätzlichen Führungsbereich 31' zu realisieren. Wird also der gesamte Führungsbereich des Federschamiers 1 einerseits durch den innen liegenden Führungsbereich 31' und andererseits durch den außen liegenden Führungsbereich 31 realisiert, so nimmt die Gesamtlänge des Gehäuses 3 zu. Da der innere Führungsbereich 31' aber relativ kurz ausgelegt werden kann, weil durch den äußeren Führungsbereich 31 eine zusätzliche Führung gewährleistet ist, baut das hier dargestellte Federscharnier 1' gemäß Figur 5 immer noch kürzer als herkömmliche Federscharniere, deren Führungsbereich vollständig im Bereich der Ausnehmung 5 realisiert wird.

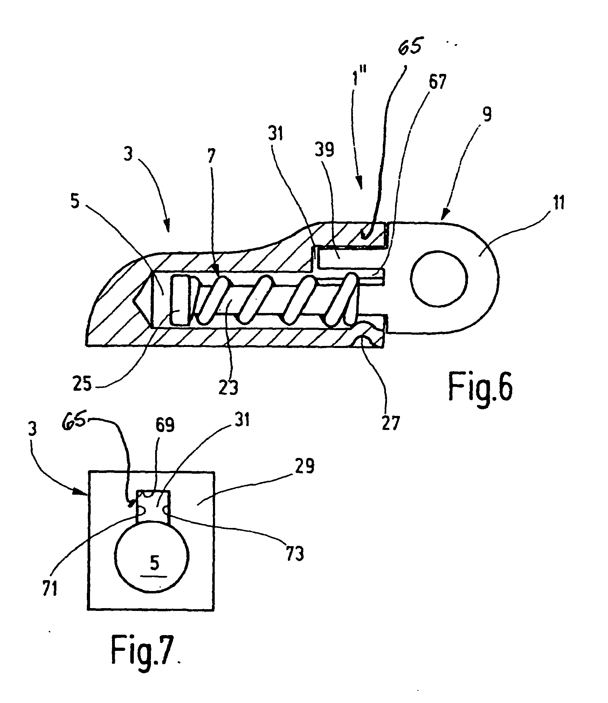

Figur 6 zeigt ein nicht zur Erfindung gehörendes Federschamier 1", das gegenüber dem in den vorangegangenen Figuren dargestellten leicht abgewandelt ist. Gleiche Teile sind mit gleichen Bezugsziffern versehen, so das insofern auf die Beschreibung zu den Figuren 1 bis 5 verwiesen wird.

Das Federschamier 1" weist ein Gehäuse 3 auf, das auf einen hier nicht dargestellten Bügel oder ein Mittelteil einer Brille angebracht werden kann, oder aber, wie oben erläutert, Teil eines Brillengestells sein kann. Im Inneren des Gehäuses 3 ist eine Ausnehmung 5 vorgesehen, die eine Federeinrichtung 7 aufnimmt, die beispielsweise als Schraubenfeder ausgebildet ist. In der Ausnehmung 5 ist auch ein Scharnierelement 9 zumindest teilweise untergebracht, hier ein Stift 23 des Schamierelements 9, der die Schraubenfeder durchdringt. Die hier also als Schraubenfeder ausgebildete Federeinrichtung 7 wird durch eine Sicke 27 in der Ausnehmung 5 gehalten, die von unten in das Gehäuse 3 eingebracht ist, also von der Seite, die später auf dem Bügel oder Mittelteil einer Brille aufliegt. Damit ist die Sicke 27 im montierten Zustand des Federscharniers 1" unsichtbar. Die Schraubenfeder stützt sich also einerseits an der Sicke 27, die in die lichte Weite der Ausnehmung 5 hineinragt, ab, andererseits an einer Sicherung 25, die an dem dem Scharnierauge 11 abgewandten Ende des Stifts 23 vorgesehen ist.

Das Schamierelement 9 weist einen vom Schamierauge 11 ausgehenden Abschnitt auf, der mit dem Führungsbereich 31 zusammenwirkt, nämlich einen Vorsprung 39. Dieser liegt, anders bei den vorangegangenen Federscharnieren, nicht nach außen offen im Führungsbereich 31, sondern wird von dem Gehäuse 3 außen eingeschlossen.

Der Vorsprung 39 ragt ausgehend vom Schamierauge 11 in die Richtung des Stifts 23. Er liegt hier parallel zu diesem in einem derartigen Abstand, dass zwischen dem Vorsprung 9 und dem Stift 23 ein Zwischenraum 67 gegeben ist, in dem ein Teil der Federeinrichtung 7 angeordnet ist, hier also ein Teil der Schraubenfeder.

Durch diese Ausgestaltung wird gewährleistet, dass eine Führung des Schamierelements 9 durch den Führungsbereich 31 möglich ist, wobei der Führungsbereich neben der Federeinrichtung 7 liegt, sich also nicht an diese anschließt. Damit wird eine relativ kurze und niedrige Bauform des Federschamiers 1" gewährleistet.

Auch bei dem in Figur 6 dargestellten Federschamier liegt der Führungsbereich 31 außerhalb der Ausnehmung 5, die dazu dient, die Federeinrichtung 7 aufzunehmen. Die Ausnehmung hat also einen Innendurchmesser, der etwas größer ist als der Außendurchmesser der Federeinrichtung, also der Schraubenfeder, die den Stift 23 umgibt. Der Führungsbereich 31 liegt außerhalb des Bereichs der Ausnehmung, der diesen auf die Schraubenfeder abgestimmten Innendurchmesser aufweist und ist durch eine Nut 65 realisiert. Bei dem hier dargestellten Ausführungsbeispiel liegt also der Führungsbereich 31 außerhalb der die Federeinrichtung 7 aufnehmenden Ausnehmung 5, wird aber durch eine mit dieser verbundenen Nut 65 realisiert.

Eine Draufsicht auf die Stirnseite 29 des Gehäuses 3 ist in Figur 7 dargestellt. Bei dieser Darstellung ist das Scharnierelement 9 noch nicht in die Ausnehmung 5 eingebracht. Daher wird hier deutlich, dass der Führungsbereich 31 neben der Ausnehmung vorgesehen ist. Er wird durch eine in den Grundkörper des Gehäuses 3 eingebrachte Nut 65 realisiert, die nach außen geschlossen ist und hier beispielhaft einen im Wesentlichen rechteckförmigen Querschnitt aufweist. In diese Nut 65 ragt der Vorsprung 39, der grundsätzlich einen kreisrunden Querschnitt aufweisen kann, vorzugsweise jedoch ebenfalls im Wesentlichen rechteckförmig ausgebildet ist, so dass einerseits der der Ausnehmung 5 abgewandte Boden 69 der Nut 65 eine Führung für den Vorsprung 39 bildet, aber andererseits auch deren seitliche Begrenzungswände 71 und 73.

Da der Führungsbereich 31 außerhalb der Ausnehmung 5 angeordnet ist, kann dieser, wie bereits oben beschrieben, auch als Verdrehsicherung wirken. Das Scharnierelement 9 kann also innerhalb der Ausnehmung 5 nicht verdreht werden, weil der Vorsprung 39 seitlich durch die Begrenzungswände 71 und 73 abgestützt wird.

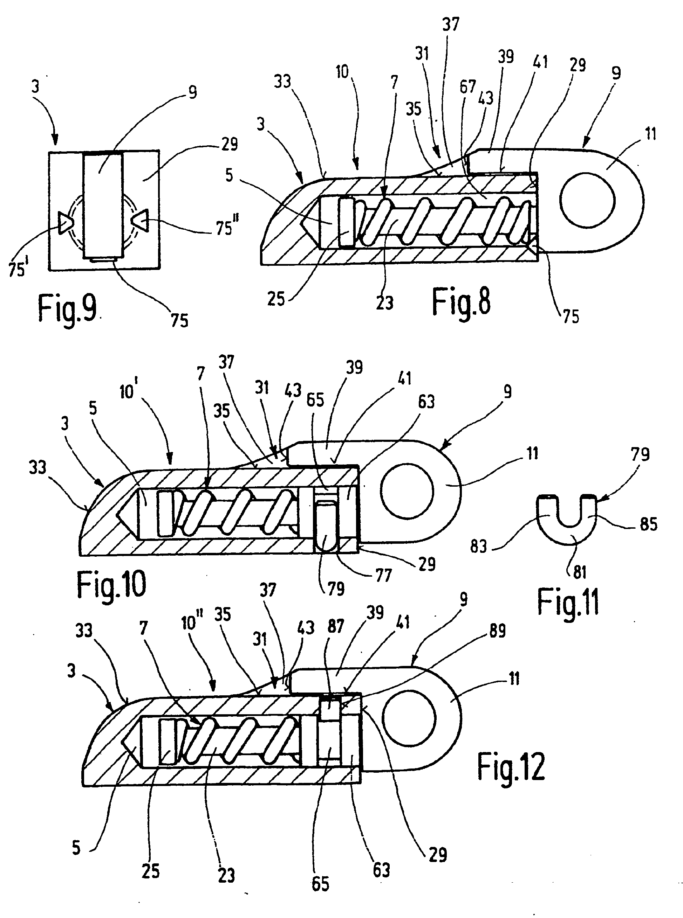

Der in Figur 8 wiedergegebene Teillängsschnitt durch ein weiteres Ausführungsbeispiel eines Federscharniers 10 zeigt wiederum ein Gehäuse 3 und ein in einer Ausnehmung 5 des Gehäuses zumindest teilweise eingesetzte Scharnierelement 9. Gleiche Teile sind mit gleichen Bezugsziffern versehen, so dass auf die vorangegangenen Figuren verwiesen wird.

Bei dem in Figur 8 dargestellten Ausführungsbeispiel weist das Scharnierauge 11 des Scharnierelements 9 wiederum einen Vorsprung 39 auf, der, wie bei den vorangegangenen Ausführungsbeispielen, sich in Richtung des Stifts 23 erstreckt und in einem Abstand zu diesem angeordnet ist, so dass das Federelement 7 in dem Zwischenraum 67 zwischen dem Vorsprung 39 und dem Stift 23 angeordnet sein kann und der Vorsprung 39 das Federelement 7 bereichsweise überragt. Der Vorsprung wirkt mit einem Führungsbereich 31 zusammen, wie er bereits anhand der Figuren 1 und 2 erläutert wurde. Es wird daher auf die Beschreibung oben verwiesen.

Das Federelement 7 weist auch hier eine Schraubenfeder auf, die sich einerseits an einer Sicherung 25 abstützt, die an dem dem Scharnierauge 11 abgewandten Ende des Stifts 23 vorgesehen ist, andererseits an einem Widerlager 75, das durch eine in die Stirnseite 29 des Gehäuses 3 eingebrachte Verformung gebildet wird. Es ist also möglich, ein Widerlager durch Verstemmen zu realisieren.

Die in Figur 9 wiedergegebene Draufsicht auf die Stirnseite 29 des Gehäuses 3, in das das Scharnierelement 9 eingesetzt ist, zeigt, dass drei Widerlager vorgesehen sein können, nämlich das bereits erwähnte untere Widerlager 75, außerdem zwei seitliche Widerlager 75' und 75''. Das untere Widerlager 75 kann dadurch eingebracht werden, dass das Scharnierelement 9 so weit gegen die Kraft des Federelements 7 herausgezogen wird, dass der Vorsprung 39 nicht mehr im Bereich des Führungsbereichs 31 liegt und das Scharnierelement 9 um den Stift 23 verdrehbar ist.

Grundsätzlich ist es jedoch ausreichend, das Federelement 7 in der Ausnehmung 5 mittels eines Widerlagers festzuhalten. Am einfachsten sind dabei die Widerlager 75' und/oder Widerlager 75'' realisierbar.

Das in Figur 10 im Teilschnitt dargestellte Federscharnier 10' ist gegenüber dem in Figur 8 dargestellten insofern abgewandelt, als die Fixierung des Scharnierelements 9 im Gehäuse 3 abweichend realisiert ist. Im Übrigen sind gleiche Teile mit gleichen Bezugsziffern versehen, so dass auf die vorangegangene Beschreibung verwiesen wird.

In das Gehäuse 3 ist auf der Unterseite ein Schlitz 77 eingebracht, durch das ein Verriegelungselement 79 eingesetzt wird, das in die Ausnehmung 5 so hineinragt, dass das Federelement 7 nicht aus der Ausnehmung herausgezogen werden kann. Bei dem hier dargestellten Ausführungsbeispiel wirkt das Verriegelungselement 79 mit einem Ring 63 zusammen, in dessen Außenfläche eine umlaufende Nut 65 eingebracht ist. Das Verriegelungselement 79 greift in die Nut 65 so ein, dass der Ring 63 gegen axiale Verlagerung im Inneren der Ausnehmung 5 gesichert ist. Das Federelement 7 stützt sich damit hier nicht unmittelbar am Verriegelungselement 79 ab, sondern an dem von diesem gehaltenen Ring 63.

Figur 11 zeigt das Verriegelungselement 79 in Draufsicht, also gegenüber der in Figur 10 gewählten Darstellung um 90° gedreht. Figur 11 lässt also erkennen, dass das Verriegelungselement 79 U-förmig ausgebildet sein kann, also eine Basis 81 aufweisen kann, von der zwei Schenkel 83 und 85 ausgehen.

Grundsätzlich ist es möglich, das Federelement 7 in der Ausnehmung 5 durch einen oder zwei Stifte zu fixieren, die nicht miteinander verbunden sind, also quasi einen einzelnen Schenkel 83 und /oder 85 zur Fixierung zu verwenden.

Figur 12 zeigt schließlich ein weiteres Ausführungsbeispiel eines Federscharniers 10''. Es ist grundsätzlich so aufgebaut, wie die in den Figuren 8 und 10 beschriebenen. Gleiche Teile sind mit daher mit gleichen Bezugsziffern versehen, so dass auf die Beschreibung oben verwiesen werden kann.

Abweichend ist hier lediglich die Fixierung des Scharnierelements 9 beziehungsweise des Federelements 7 in der Ausnehmung 5, die in das Gehäuse 3 des Federscharniers 10" eingebracht ist. Es ist hier ein Stift 87 vorgesehen, der hier von oben in eine Öffnung 89 im Gehäuse 3 eingesetzt ist, die im Boden 35 der den Führungsbereich 31 realisierenden Nut vorgesehen ist. Bei der in Figur 12 dargestellten Funktionsstellung des Federscharniers 10" ist der Stift 87 durch den Vorsprung 39 verdeckt und gesichert. Der Stift 87 ist so lang gewählt, dass er in die Ausnehmung 5 hineinragt und das Federelement 7 gegen axiale Verlagerung sichert. Der Stift 87 kann unmittelbar mit dem Federelement 7 zusammenwirken, das hier als Schraubenfeder ausgebildet ist. Es ist aber, wie oben beschrieben, möglich, dass der Stift mit einem Ring 63 zusammenwirkt, der durch den Stift 87 in der Ausnehmung 5 sicher gehalten wird und als Widerlager für das Federelement 7 dient. Der Ring 63 kann, wie hier dargestellt, mit einer umlaufenden Nut 65 versehen werden, so dass das Einsetzen des Stifts 87 unabhängig von der Drehposition des Rings 63 leicht möglich ist. Der Stift 87 kann auch seitlich oder von unten in das Gehäuse 3 so eingesetzt werden, dass er in die Ausnehmung ragt.

Die kürzeste Bauform des Federscharniers 1, 1', 1'', 10, 10', 10'' lässt sich, wie aus den Figuren 1, 2, 6, 8, 10 und 12 ersichtlich, dann realisieren, wenn der Führungsbereich 31 vollständig aus dem Bereich der Ausnehmung 5 heraus, beispielsweise in den Bereich der Außenfläche 33 des Gehäuses 3 verlegt wird.

Aus der Funktion des Federscharniers wird deutlich, dass der Vorsprung 39 grundsätzlich auch auf der gegenüberliegenden Seite des Scharnierelements 9, also auf dessen Unterseite oder seitlich vorgesehen werden kann und damit in einem anderen Abschnitt des Gehäuses 3 zur Wirkung kommt. Es können letztlich auch zwei derartiger Vorsprünge vorgesehen werden, die einander gegenüberliegen und das Scharnierelement 9 auf beiden Seiten führen.

Die kompakteste Bauform lässt sich jedoch dann realisieren, wenn lediglich ein einziger Vorsprung 39 vorgesehen ist, der einerseits mit dem Führungsbereich 31 zusammenwirkt und andererseits mit dem Führungsbereich eine Verdrehsicherung beziehungsweise Stabilisierung des Federscharniers 1, 1', 1'', 10, 10', 10" bildet.

Aus den Erläuterungen wird deutlich, dass der Führungsbereich 39 kostengünstig und leicht realisierbar ist. Es bedarf bei der Herstellung des Scharnierelements 9, das beispielsweise in einem Stanzvorgang herstellbar ist, lediglich eines Vorsprungs 39, der vom Scharnierauge 11 ausgeht und in Richtung des Stifts 31 verläuft. Die Einbringung der Nut 51 in die Außenfläche des Gehäuses 3 ist auf einfache Weise möglich. Auch die verdeckte Nut 51 kann ohne weiteres durch eine parallel zur Ausnehmung 5 verlaufende Ausnehmung beziehungsweise Bohrung realisiert werden, die dann den Vorsprung 39 aufnimmt.

Bei den hier beschriebenen Ausführungsbeispielen ist die Nut im Wesentlichen U-förmig, wobei der Boden 35 mit den Seitenflächen jeweils einen rechten Winkel einschließt, um einen im Querschnitt rechteckigen beziehungsweise quadratischen Vorsprung 39 aufzunehmen. Grundsätzlich kann insbesondere bei einer als Bohrung ausgebildeten verdeckten Nut der Vorsprung aber auch einen ovalen oder kreisförmigen Querschnitt aufweisen. Entscheidend ist, dass der Vorsprung Teil einer Führungseinrichtung ist, die einen außerhalb der Ausnehmung 5 liegenden Führungsbereich aufweist, so dass das Federscharnier 1, 1', 1'', 10, 10', 10'' sehr kurz baut. Die Figuren zeigen, dass die Nut länger ist als der Vorsprung 9. Dies ist jedoch nicht von entscheidender Bedeutung. Wesentlich ist, dass der Führungsbereich 31 Abschnitte aufweist, die außerhalb der Ausnehmung 5 beispielsweise auf der Außenseite des Gehäuses 3 liegen und die mit einem Bereich des Scharnierelements zusammenwirken, der ebenfalls einen Abschnitt umfasst, der dem Führungsbereich 31 zugeordnet ist. Bei den hier beschriebenen Ausführungsbeispielen ist der Bereich des Scharnierelements 9 als Vorsprung 39 ausgebildet, der außerhalb der Ausnehmung 5 angeordnet ist und mit mindestens einem Abschnitt des Führungsbereichs 31 des Gehäuses 3 zusammenwirkt. Eine besonders gute Führung ergibt sich, wenn die Nut den Vorsprung an drei Seiten umschließt, so dass in beiden Drehrichtungen um die Mittelachse des Stifts 23 eine Verdrehsicherung gegeben ist.

Bei den Erläuterungen der Ausführungsbeispiele wurde beispielhaft davon ausgegangen, dass das Federelement 7 eine Schraubenfeder umfasst. Denkbar ist es auch, rechts und/oder links neben dem Stift 23 ein Federelement, beispielsweise eine Mäander-Feder vorzusehen.

Aus den Erläuterungen zu den verschiedenen Ausführungsbeispielen des Federscharniers wird Folgendes deutlich: Die Bauform des Federscharniers kann wesentlich dadurch reduziert werden, dass ein Führungsbereich 31 für das Scharnierelement 9 vorgesehen ist, der sich nicht an das Federelement 7 anschließt. Es ist vielmehr dafür Sorge getragen, dass der Führungsbereich 31 neben dem Federelement 7 liegt. Dabei ist es möglich, den Führungsbereich 31 unmittelbar neben dem Führungselement 7 zu realisieren, was beispielsweise aus der Darstellung gemäß Figur 6 ersichtlich ist. Möglich ist es auch, zwischen dem Führungsbereich 31 und dem Federelement 7 einen Wandabschnitt des Gehäuses 3 vorzusehen, wie dies bei dem Ausführungsbeispielen gemäß den Figuren 1, 2, 5, 8, 10 und 12 der Fall ist. Der Führungsbereich 31 wirkt mit einem Abschnitt des Schamierelements 9 zusammen, der hier beispielsweise als Vorsprung 39 ausgebildet ist. Dieser erstreckt sich, aus den vom Scharnierauge 11, in die gleiche Richtung, wie der Stift, der mit dem Federelement 7 zusammenwirkt. Er befindet sich in einem Abstand zu dem Stift 23, so dass auf jeden Fall das Federelement 7 zwischen dem Vorsprung 39 und dem Stift 23 untergebracht werden kann, gegebenenfalls auch ein Wandabschnitt des Gehäuses 3. Dabei ist wesentlich, dass der Vorsprung 39 sich über einen Bereich des Federelements 7 erstreckt, wobei sich der Führungsbereich 31 ebenfalls über einen Bereich des Federelements 7 erstreckt. Die Längsausdehnung des Federelements 7 und die des Führungsbereichs 31 addieren sich also nicht. Dies führt zu der kurzen Bauform des Federschamiers 1.

Die in den Figuren 1 bis 12 dargestellten Ausführungsbeispiele des Federscharniers zeichnen sich also dadurch aus, dass zumindest ein Abschnitt des Führungsbereichs 31 außerhalb der Ausnehmung 5 angeordnet ist, wobei der Führungsbereich vollständig außerhalb der Ausnehmung 5 liegen kann, oder wie anhand der Figuren 6 und 7 erläutert, zwar außerhalb der Ausnehmung 5 angeordnet, aber mit dieser verbunden ist, indem der Führungsbereich 31 durch eine in die Innenwand der Ausnehmung 5 eingebrachte Nut 65 realisierbar ist.

Im Folgenden wird auf nicht zur Erfindung gehörende Federscharniere eingegangen, bei denen der Führungsbereich 31 außerhalb der Ausnehmung 5 angeordnet und durch mindestens einen Vorsprung 39 realisierbar ist, der von der Stirnseite 29 des Gehäuses 3 ausgeht. Durch den Vorsprung 39 wird eine Verlängerung des Gehäuses 3 realisiert, diese wirkt sich auf die gesamte Bauform des aus einem Federscharnier und einem Scharnierteil bestehenden Scharniers für eine Brille nicht aus, weil der Führungsbereich 31 am Scharnierteil 15 realisiert wird, der Vorsprung 39 also in einen Bereich des Scharnierteils 15 eingreift. Das Gehäuse 3 des Federscharniers 1 ist im Bereich der Ausnehmung 5 für die Federeinrichtung 7 verkürzt, weil die Ausnehmung 5 keinen Führungsbereich 31 mehr aufzuweisen braucht, wie dies bei Federscharnieren herkömmlicher Art der Fall ist.

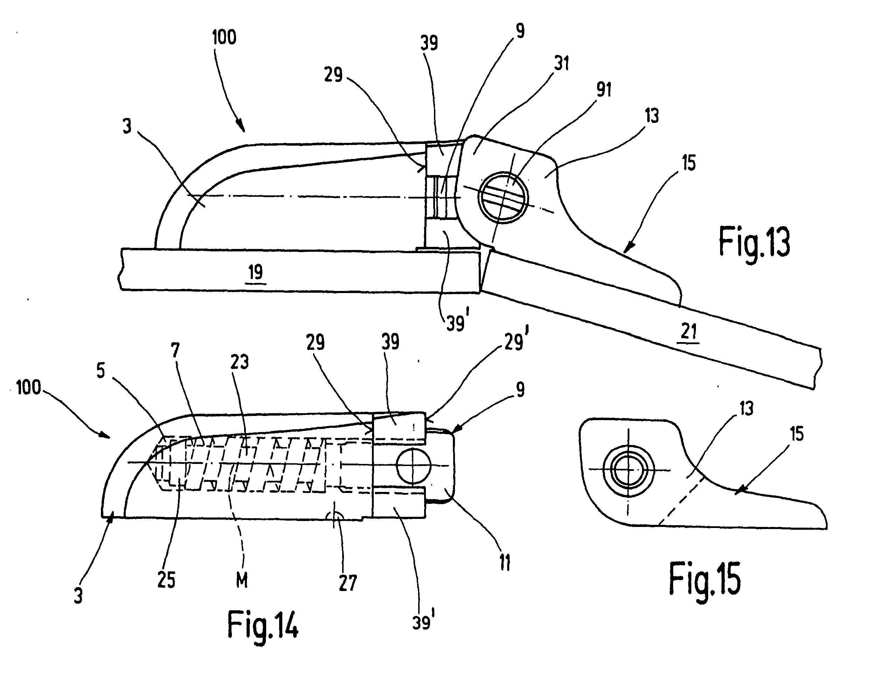

Gemeinsam ist den hier beschriebenen Ausführungsbeispielen also, dass die nach außen sichtbare Baulänge des Gehäuses 3 des Federscharniers 1 dadurch verkürzt wird, dass die Ausnehmung 5 zum Führungsbereich 31 nichts beiträgt, sondern dass dieser außerhalb dieser Ausnehmung 5 angeordnet ist. Auf die Ausführungsbeispiele des Federscharniers 100, die im Bereich der Stirnseite 29 des Gehäuses 3 mit mindestens einem Vorsprung 39 versehen sind, der mit einem Führungsbereich 31 im Bereich des Scharnierteils 15 zusammenwirkt, wird anhand der Figuren 13 bis 24 näher eingegangen. Diese zeigen also Federscharniere und deren Elemente. Gleiche Teile sind mit Bezugsziffern versehen, wie sie bereits anhand der Figuren 1 bis 12 verwendet wurden. Insofern wird auf die Beschreibung zu diesen Figuren verwiesen.

Figur 13 zeigt in Seitenansicht ein nicht zur Erfindung gehörendes Federschamier 100 mit einem Gehäuse 3, von dessen Stirnseite 29 mindestens ein Vorsprung 39 ausgeht. Hier sind oben und unten am Gehäuse 3 zwei in einem Abstand angeordnete Vorsprünge 39 und 39' vorgesehen. Diese greifen in das Scharnierteil 15 ein und realisieren damit hier einen Führungsbereich 31. Die von der Stirnseite 29 aus gemessene Länge der Vorsprünge 39, 39' ist so gewählt, dass auch im überdrückten Zustand diese noch in das Scharnierteil 15 eingreifen, um auch in dieser Funktionsstellung des Federschamiers 100 eine Verdrehsicherung zu realisieren. Es ist also bei dieser Ausgestaltung und Realisierung der Verdrehsicherung nicht möglich, das Scharnierteil 15 gegenüber dem Gehäuse 3 zu verdrehen.

Zwischen den beiden Vorsprüngen 39 und 39' liegt hier das in das Innere des Gehäuses 3 ragende Scharnierelement 9.

Das Scharnierauge des Schamierelements 9 ist hier durch das Scharnierauge 13 des Scharnierteils 15 verdeckt. Die beiden Schamieraugen sind durch eine geeignete Schraube 91 miteinander schwenkbar verbunden.

Bei dem hier dargestellten Federschamier ist das Gehäuse 3 auf einen Bügel 19 einer Brille aufgesetzt, das Scharnierteil 15 auf den Mittelteil der Brille. Auch hier ist es aber möglich, das Federscharnier 100 so auszubilden, wie dies anhand von Figur 3 erläutert wurde. Dabei ist dann das Gehäuse 3 Teil des Mittelteils der Brille.

Figur 14 zeigt das Federscharnier 100 ohne das Scharnierteil 15. Deutlich ist hier das zwischen den Vorsprüngen 39 und 39' liegende Scharnierelement 9 erkennbar, dessen Scharnierauge 11 im Wesentlichen T-förmig ausgebildet ist: Der Endbereich des Scharnierelements 9 ist also breiter als der zwischen den Vorsprüngen 9 und 9' gegebene Zwischenraum, so dass der Endbereich an der Stirnseite 29' der Vorsprünge 39, 39' anschlägt.

Aus der Darstellung gemäß Figur 14 ist gestrichelt die Ausnehmung 5 im Inneren des Gehäuses 3 ersichtlich, die die Federeinrichtung 7, hier also die Schraubenfeder aufnimmt, die sich einerseits an einer Sicherung 25 und andererseits am gegenüberliegenden Ende an einer Sicke 27, die hier von unten in das Gehäuse 3 eingebracht ist und in die Ausnehmung 5 so hineinragt, dass die Schraubenfeder der Federeinrichtung 7 auch bei einer auf das Scharnierelement 9 wirkenden Zugkraft nicht aus der Ausnehmung 5 herausgezogen werden kann.

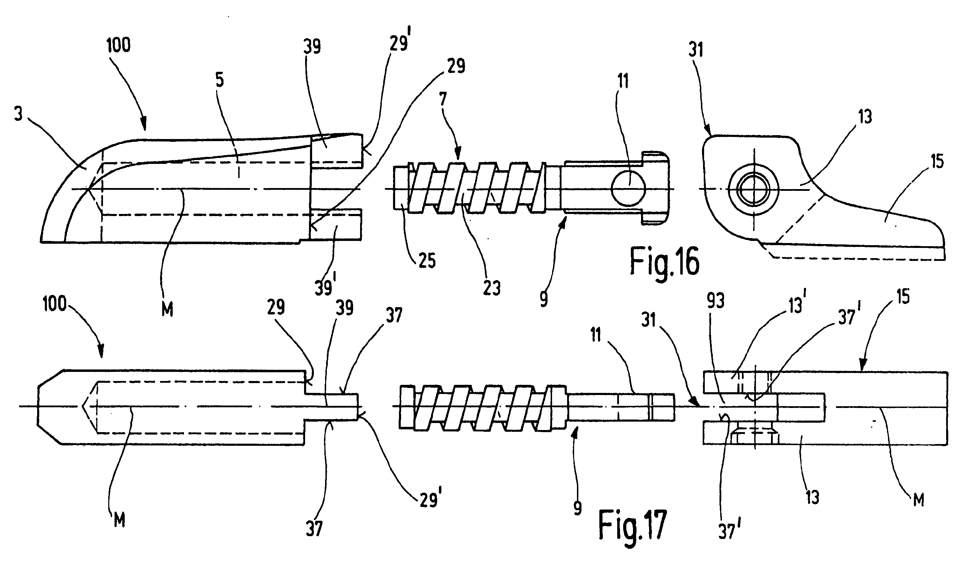

Das in Seitenansicht in Figur 15 dargestellte Scharnierteil 15 ist ebenfalls demontiert dargestellt. Es weist mindestens ein Scharnierauge 13 auf, vorzugsweise zwei in einem Abstand angeordnete Scharnieraugen, von denen hier das vordere in Figur 15 ersichtlich ist. Die dem Betrachter abgewandte Seite des Scharnierauges 13 liegt im montierten Zustand an der dem Betrachter zugewandten Seitenfläche der Vorsprünge 39 und 39', so dass zwar in Richtung der Mittelachse M der Schraubenfeder beziehungsweise des Stifts 23 des Scharnierelements 9 eine Bewegung des Scharnierelements 9 möglich ist, nicht aber eine Verdrehung des Scharnierelements 9 und des Scharnierteils 15 gegenüber dem Gehäuse 3.

Figur 16 zeigt die Teile des in Figur 13 wiedergegebenen Federscharniers 100 gemeinsam mit dem Scharnierteil 15 in Explosionsdarstellung. Gleiche Bezugsziffern verweisen auf gleiche Teile, so dass auf die Beschreibung zu den vorangegangenen Figuren verwiesen wird.

Deutlich ist erkennbar, dass das Scharnierteil 9 in die vorzugsweise durch eine Bohrung hergestellte Ausnehmung 5 einschiebbar ist. Dabei ist der Durchmesser der Bohrung vorzugsweise größer als der Abstand der Vorsprünge 39 und 39', so dass die einander zugewandten Innenflächen der Vorsprünge 39 und 39' unter einem Radius gewölbt sind und parallel zur Mittelachse M verlaufen.

Das Scharnierelement 9 kann in die Ausnehmung 5 eingeschoben und dort mittels der in Figur 14 erwähnten Sicke 27 sicher verankert werden. Deutlich ist hier der Stift 23 des Scharnierelements 9 ersichtlich, der das Federelement 7 trägt, welches hier als Schraubenfeder ausgebildet ist und sich einerseits an der Sicherung 25 abstützt, die eine Durchmesservergrößerung des Stifts 23 darstellt. Auf der gegenüberliegenden Seite stützt sich das Federelement 7 am Grundkörper des Scharnierelements 9 ab, dessen senkrecht zur Mittelachse M gemessene Ausdehnung größer ist als der Außendurchmesser des Stifts 23.

Deutlich wird in der Darstellung gemäß Figur 16 die T-förmige Ausgestaltung des rechten Endes des Scharnierelements 9 mit dem Scharnierauge 11 ersichtlich, die dazu dient, einen Anschlag gemeinsam mit der Stirnfläche 29' der Vorsprünge 39 und 39' zu realisieren.

Die senkrecht zur Bildebene gemessene Dicke des Scharnierelements 9 ist kleiner als der Abstand der Scharnieraugen 13 des Scharnierteils 15. Ebenso die entsprechende Dicke der Vorsprünge 39 und 39'. Es ist damit möglich, dass das Scharnierelement 9 und die Vorsprünge 39, 39' in den zwischen den Scharnieraugen 13 des Scharnierteils 15 liegenden Freiraum eingreifen.

Aus der in Figur 17 wiedergegebenen Draufsicht auf die in Figur 16 wiedergegebenen Teile wird besonders deutlich, dass das Scharnierteil 15 hier zwei in einem Abstand zueinander liegende Scharnieraugen 13 und 13' aufweist, zwischen denen der Freiraum 93 gegeben ist, in dem einerseits das rechte T-förmige Ende des Scharnierelements 9 angeordnet ist, also das Scharnierauge 11 und andererseits die Vorsprünge 39 und 39', von denen hier der obere Vorsprung 39 sichtbar ist. Die seitlichen Begrenzungsflächen 37' des Freiraums 93, die parallel zur Mittellinie M verlaufen, wirken zusammen mit den Seitenflächen 37 der Vorsprünge 39 und 39' um den Führungsbereich 31 zu bilden.

Insbesondere aus der Draufsicht gemäß Figur 17 wird deutlich, dass der mindestens eine Vorsprung 39 insbesondere zwei in einem Abstand zueinander angeordnete Vorsprünge 39 und 39' gemeinsam mit den Seitenflächen 37' des Führungsbereichs 31 so zusammenwirken, dass eine Relativdrehung zwischen dem Gehäuse 3 des Federscharniers 100 und dem Scharnierteil 15 ausgeschlossen ist, wobei aber eine innerhalb des Scharnierteils 15 gegebene axiale Führung gewährleistet ist.

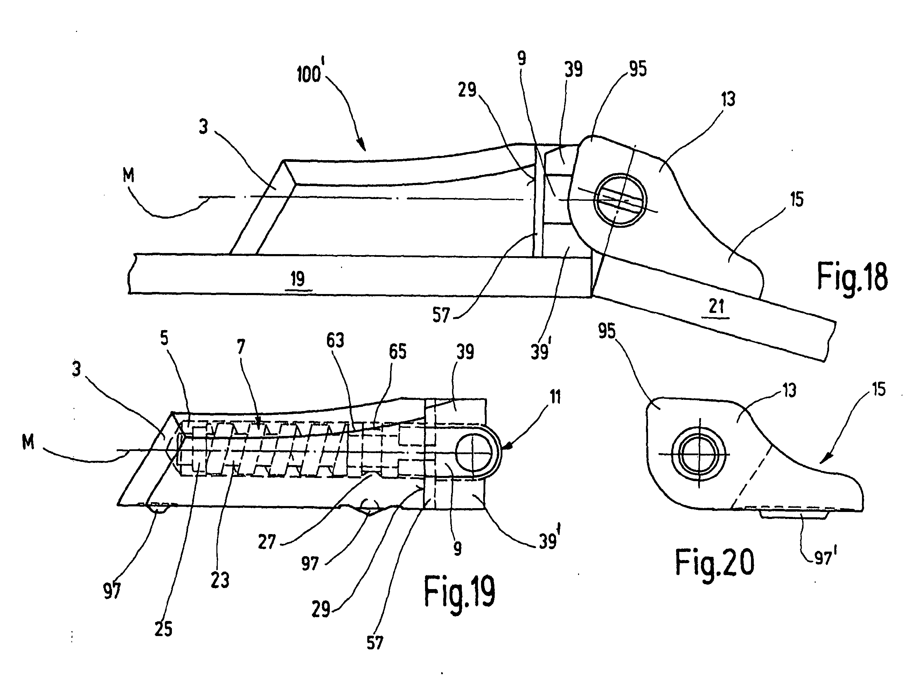

Figur 18 zeigt ein weiteres Federschamier 100'. Gleiche Teile sind mit gleichen Bezugsziffern versehen, so dass auf die Beschreibung zu den vorangegangen Figuren verwiesen wird.

Das Federschamier 100' weist ein Gehäuse 3 auf, von dessen Stirnseite 29 mindestens ein, hier wiederum zwei in einem Abstand zur Mittelachse M angeordnete Vorsprünge 39 und 39' entspringen und in Richtung auf das Scharnierteil 15 ragen. Die Vorsprünge 39, 39' wirken auch hier mit dem mindestens einen Scharnierauge 13 des Scharnierteils 15 zusammen und realisieren damit eine Verdrehsicherung, die eine Verdrehung des Gehäuses 3 gegenüber dem Scharnierteil 15 verhindert, wobei eine axiale Bewegung des Schamierelements 9 in Richtung der Mittelachse M möglich ist.

Das Federscharnier 100' ist bei der Darstellung gemäß Figur 18 in seine überdrückte Lage gebracht, in der das Scharnierelement 9 aus dem Inneren des Gehäuses 3 herausgezogen ist.

Auf der Stirnseite 29 liegt hier ein Materialstreifen 57 auf, an dem eine Nase 95 des Scharnierauges 13 beim Verschwenken des Scharnierteils 15 gegenüber dem Gehäuse 3 entlang läuft. Der Materialstreifen 57 verhindert ein Fressen der Nase 95 auf der Stirnseite 29, was insbesondere dann zu beobachten ist, wenn die Nase 95 und die Stirnseite 29 aus Titan bestehen.

Figur 19 zeigt das Gehäuse 3 des Scharnierelements ohne den Bügel 19, auf dem das Gehäuse aufgebracht ist. Außerdem ist das Scharnierteil 15 demontiert.

Die Darstellung gemäß Figur 19 lässt Schweißwarzen 97 erkennen, die auch bei den Ausführungsbeispielen, die in den Figuren 1, 2 und 6 bis 12 dargestellt sind, vorgesehen sein können und auf der Unterseite des Gehäuses 3 vorgesehen sind und der Anbringung des Gehäuses 3 am Bügel 19 mittels eines Elektroschweißverfahrens dienen.

Das Scharnierauge 11 des Schamierelements 9 ist hier nur so hoch ausgebildet, wie es der Freiraum zwischen den beiden im Wesentlichen parallel zur Mittelachse M verlaufenden Vorsprünge 39 und 39' erlaubt. Das Scharnierelement ist hier mittels eines Rings 63 in der Ausnehmung 5 im Gehäuse 3 verankert. Der Ring 63 weist hier vorzugsweise eine umlaufende Ringnut 65 auf, in die eine Sicke 27 eingreift, die von unten in das Gehäuse 3 eingebracht wird und damit im montierten Zustand des Gehäuses 3 unsichtbar ist. Der in Richtung der Mittelachse M unverschieblich gehaltene Ring 63 dient einerseits als Widerlager für das eine Schraubenfeder umfassende Federelement 7, das sich auf der anderen Seite an einer Sicherung 25 abstützt, andererseits als Anschlag für das Scharnierelement 9, das senkrecht zur Mittelachse M eine größere Ausdehnung hat als der Stift 23, der parallel zur Mittelachse M verläuft und das Federelement 7 durchdringt. Bei diesem Ausführungsbeispiel kann also auf die T-förmige Verbreiterung des Schamierelements 9 verzichtet werden, die anhand der Figuren 14 und 16 erläutert wurde.

Figur 19 lässt noch mal den Materialstreifen 57 erkennen, der die Stirnseite 29 des Gehäuses 3 vor Verschleiß schützt.

Figur 20 zeigt das demontierte Scharnierteil 15, das wenigstens ein Scharnierauge 13 umfasst. Hier ist noch eine Schweißwarze 97' auf der Unterseite des Scharnierauges 15 zu sehen, mit der dieses auf einem Mittelteil 21 an der Brille im Wege des Elektroschweißverfahrens angebracht werden kann. Selbstverständlich sind hier wie bei dem Gehäuse 3 gemäß Figur 19 noch andere Befestigungsmöglichkeiten gegeben. Deutlich ist auch hier die Nase 95 des Scharnierauges 13 zu sehen.

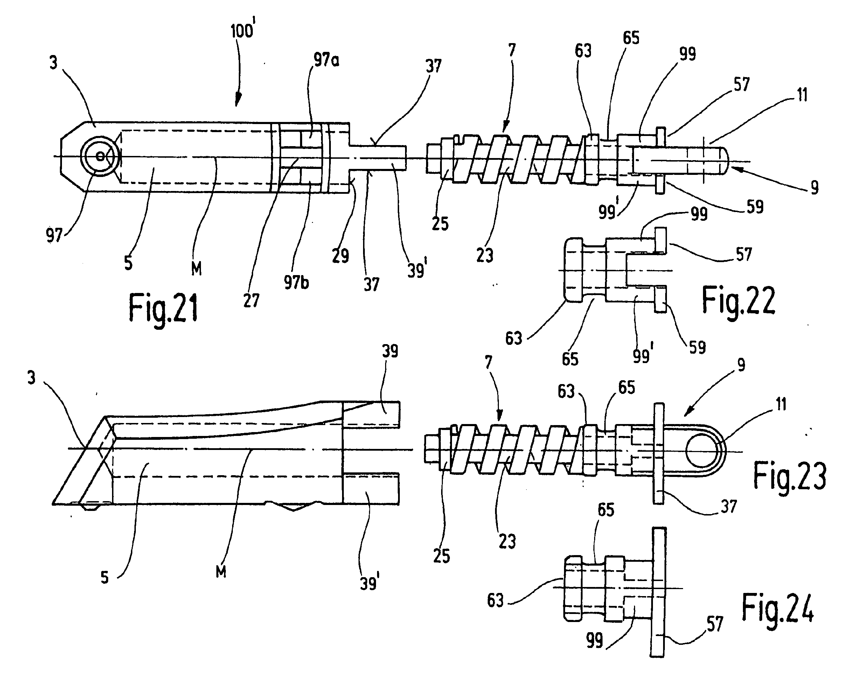

Figur 21 zeigt das Federschamier 100' in Explosionsdarstellung mit dem Scharnierelement 9 von unten. Hier ist ersichtlich, dass die Schweißwarze 97 am linken Ende des Gehäuses 3 in Draufsicht rund ausgebildet sein kann. Am rechten Ende sind zwei in einem Abstand zur Mittelachse M angeordnete Schweißwarzen 97a, 97b ersichtlich. Figur 19 zeigt in Seitenansicht die Schweißwarze 97a. Zwischen den Schweißwarzen ist ein Freiraum, in den die Sicke 27 einbringbar ist.

Von der Stirnseite 29 des Gehäuses 3 springt der wenigstens eine Vorsprung nach rechts vor. Hier ist der Vorsprung 39' erkennbar, also der untere Vorsprung. Gestrichelt ist eine Ausnehmung 5 im Gehäuse 3 erkennbar, in die das Scharnierelement 9 zumindest teilweise einschiebbar ist, so dass das Federelement 7 in der Ausnehmung zu liegen kommt. Dieses umfasst eine Schraubenfeder, die um den Stift 23 herumgreift und sich einerseits an der Sicherung 25 abstützt und andererseits an dem Ring 63, der an dem vorderen Teil des Scharnierelements 9 hier am Scharnierauge 11 anliegt. Der Ring weist hier zwei nach rechts ragende Arme 99 und 99' auf, zwischen denen das Scharnierauge 11 liegt, und an denen vorne die Materialstreifen 57 und 59 angebracht sind, die im zusammengebauten Zustand des Federscharniers 100' an der Stirnseite 29 des Gehäuses 3 aufliegen.

In die Umfangsfläche des Rings 63 ist die oben schon erwähnte Nut 65 eingebracht, die vorzugsweise als umlaufende Ringnut ausgebildet ist, damit die Sicke 27 leicht eingreifen kann.

Der Ring 63 ist zur Verdeutlichung noch mal in Figur 22 vergrößert dargestellt. Deutlich sind die Arme 99 und 99' erkennbar, an denen die Materialstreifen 57 und 59 angebracht sind.

Die Seitenansicht gemäß Figur 23 zeigt noch einmal das Gehäuse 3, in das das Scharnierelement 9 so einsetzbar ist, dass dieses zumindest teilweise in der Ausnehmung 5 angeordnet ist, die hier gestrichelt dargestellt ist. Auch hier ist der Abstand zwischen den Vorsprüngen 39 und 39' kleiner als der Durchmesser der Ausnehmung 5, so dass die der Mittelachse M zugewandten Innenflächen der Vorsprünge 39 und 39' unter dem Radius der Ausnehmung 5 gewölbt ausgebildet sind, so dass hier das Scharnierelement 9 problemlos in die Ausnehmung 5 eingeführt werden kann.

Auch aus der Seitenansicht gemäß Figur 23 ist deutlich erkennbar, dass das Scharnierelement 9 einen Stift 23 aufweist, um den das als Schraubenfeder ausgebildete Federelement 7 angeordnet ist, das sich einerseits an der Sicherung 25 und andererseits an dem Ring 63 abstützt, der den Materialstreifen 57 und den hier nicht sichtbaren Materialstreifen 59 umfasst.

Der Ring 63 ist in Figur 24 nochmals vergrößert dargestellt, so dass hier ohne weiteres die in die Außenfläche des Rings eingebrachte Nut 65 erkennbar ist, außerdem der dem Materialstreifen 57 tragende Arm 99, der vom Ring 63 ausgeht.

Aus den Figuren 13 bis 24 wird also ersichtlich, dass mittels des mindestens einen vom Gehäuse 3 ausgehenden Vorsprungs 39, vorzugsweise durch zwei Vorsprünge 39 und 39' ein Führungsbereich 31 dadurch ausgebildet wird, dass die Vorsprünge 39, 39' mit dem Scharnierteil 15 beziehungsweise mit dessen Scharnieraugen 13 zusammenwirken und eine Verdrehsicherung realisieren, die eine Relativdrehung zwischen dem Scharnierteil 15 und dem Gehäuse 3 verhindert.

Die sichtbare Baulänge des Gehäuses 3 wird bestimmt durch die Länge der Ausnehmung 5. Die Vorsprünge 39 und 39' ragen in den Bereich des Scharnierteils 15, sie tragen also zur Gesamtlänge des durch das Federscharnier 100' und das Scharnierteil 15 realisierten Scharniers für eine Brille nicht negativ bei. Das heißt also, die sichtbare Länge des Gehäuses 3 wird durch die Vorsprünge 39 und 39' nicht vergrößert, weil diese von den Scharnieraugen 13 des Scharnierteils 15 verdeckt werden.

Da hier zwei in einem Abstand zur Mittelachse M gelegene Vorsprünge 39 und 39' realisiert werden, können relativ große Kräfte abgefangen und damit eine Verdrehung vermieden werden.

Bei der Betrachtung der Figuren 18 bis 24 wird deutlich, dass das Scharnierelement 9 vor der Anbringung des Scharnierteils 15 noch verdrehbar ist. Es wird zwar aufgrund der Reibungskräfte in einer einmal vorgegebenen Position einigermaßen drehfest im Gehäuse 3 gehalten, so dass die Montage des Scharnierteils 15 am Federscharnier 100' beziehungsweise an dessen Gehäuse 3 leicht möglich ist.

Da die Vorsprünge 39 und 39' weit in das Scharnierteil 15 hineinragen können, ergibt sich auch beim Überdrücken eine sehr gute Führung des Scharnierteils 15 gegenüber dem Gehäuse 3. Es zeigt sich auch, dass durch die direkte Führung zwischen den beiden Teilen des Scharniers, also zwischen dem Gehäuse 3 und dem Scharnierteil 15 keine Toleranzaddition mehr stattfindet, wie dies bei bisherigen Federscharnieren der Fall war. Bei bekannten Scharnieren wurde das Scharnierelement im Gehäuse und andererseits in dem Scharnierteil geführt. Hier werden die Schamieraugen 13 des Scharnierteils 15 unmittelbar am Gehäuse 3 geführt, wodurch enge Toleranzen eingehalten werden können. Dabei zeigt sich auch, dass die Hebelarme der Verdrehsicherung nicht nur bei den in den Figuren 13 bis 24 dargestellten Federscharnieren, sondern auch bei den anderen gemäß den Figuren 1 bis 12 dargestellten Ausführungsbeispielen der Federscharniere relativ groß sind, insbesondere größer als bei einer Mehrkantführung des Scharnierelements innerhalb des Gehäuses 3, so dass sich exzellente Führungseigenschaften ergeben und hohe Verdrehkräfte abgefangen werden können.

Darüber hinaus ist es kostengünstig möglich, die Verdrehsicherung zu realisieren: Bei den oben genannten Beispielen, die nach dem Grundprinzip des Federscharniers gemäß Figur 1 ausgebildet sind, kann der Führungsbereich 31 durch eine von außen in das Gehäuse 3 eingebrachte Nut realisiert werden.

Bei den Federscharnieren nach den Figuren 13 bis 24 können auf einfache Weise die vom Gehäuse 3 entspringenden Vorsprünge 39 und 39' realisiert werden, weil bei deren Herstellung nicht in das Innere des Gehäuses eingegriffen werden muss. Vielmehr ist es möglich, die Elemente, die der Führung dienen, durch Sägen oder Fräsen zu realisieren.

## Patentansprüche

1. Federscharnier für Brillen mit einem Mittelteil und Bügeln, mit einem mindestens ein Scharnierauge umfassenden Scharnierelement, einer mit diesem zusammenwirkenden Federeinrichtung, mit einem eine die Federeinrichtung und das Scharnierelement zumindest teilweise aufnehmende Ausnehmung aufweisenden Gehäuse, innerhalb dessen das Scharnierelement verlagerbar angeordnet ist, und mit einem Führungsbereich für das Scharnierelement, **gekennzeichnet durch** folgende Merkmale:
- zumindest ein Abschnitt des Führungsbereichs (31) ist außerhalb der Ausnehmung (5) anordenbar,
- das Scharnierelement (9) weist mindestens einen mit dem Führungsbereich (31) zusammenwirkenden Vorsprung (39) auf,
- das Gehäuse (3) umfasst mindestens eine in seiner Außenfläche (33) eingebrachte Nut (51), die die Abschnitte des Führungsbereichs (31) umfasst,
- der Vorsprung (39) überragt das Federelement (7) zumindest bereichsweise,
- der Vorsprung (39) ist außerhalb der Ausnehmung (6) angeordnet und wirkt mit mindestens einem Abschnitt des Führungsbereichs (31) des Gehäuses (3) zusammen,
- der Vorsprung (39) ist in der Nut (51) des Gehäuses (3) anordenbar.

2. Federscharnier nach Anspruch 1, **dadurch gekennzeichnet, dass** zumindest ein Abschnitt des Führungsbereichs (31) seitlich versetzt zur Federeinrichtung (7) angeordnet ist.

3. Federscharnier nach Anspruch 1 oder 2, **dadurch gekennzeichnet, dass** der Führungsbereich (31) durch eine in die Wandung der Ausnehmung (5) eingebrachte Nut realisierbar ist.

4. Federscharnier nach einem der vorhergehenden Ansprüche, **dadurch gekennzeichnet, dass** zumindest ein Abschnitt des Führungsbereichs (31) am Gehäuse (3) angeordnet ist.

5. Federschamier nach einem der vorhergehenden Ansprüche, **dadurch gekennzeichnet, dass** die Nut (51) im Wesentlichen parallel zum Verlagerungsweg des Scharnierelements (9) verläuft.

6. Federscharnier nach einem der vorhergehenden Ansprüche, **dadurch gekennzeichnet, dass** das Scharnierelement (9) mindestens einen Bereich mit wenigstens einem Abschnitt aufweist, der dem Führungsbereich (31) zugeordnet ist.

7. Federschamier nach einem der vorhergehenden Ansprüche, **dadurch gekennzeichnet, dass** der Bereich des Scharnierelements (9) als Vorsprung (39) ausgebildet ist.

8. Federschamier nach Anspruch 7, **dadurch gekennzeichnet, dass** der Vorsprung (39) einen rechteckigen, quadratischen oder kreisförmigen Querschnitt aufweist.

9. Federscharnier nach einem der vorhergehenden Ansprüche, **dadurch gekennzeichnet, dass** die Nut (51) den Vorsprung (39) an drei Seiten umschließt.

10. Federscharnier nach einem der vorhergehenden Ansprüche, **dadurch gekennzeichnet, dass** die Nut (51) einen U-förmigen Querschnitt aufweist.

11. Federscharnier nach einem der vorhergehenden Ansprüche, **dadurch gekennzeichnet, dass** der Boden (35) der Nut (51) und/oder mindestens eine der Seitenflächen (37,37') der Nut (51) Abschnitte des Führungsbereichs (31) bilden.

12. Federscharnier nach einem der vorhergehenden Ansprüche, **dadurch gekennzeichnet, dass** die Nut (51) einen äußeren Abschluss aufweist.

13. Federschamier nach einem der vorhergehenden Ansprüche, **dadurch gekennzeichnet, dass** eine Sicke (27) durch den Vorsprung (39) des Schamierelements (9) verdeckbar ist

14. Federscharnier nach einem der vorhergehenden Ansprüche, **dadurch gekennzeichnet, dass** der Führungsbereich (31) getrennt ist von der Ausnehmung (5).

15. Federscharnier nach einem der vorhergehenden Ansprüche, **dadurch gekennzeichnet, dass** der Führungsbereich (31) vollständig außerhalb der Ausnehmung (5) anordenbar Ist.

16. Federscharnier nach einem der vorhergehenden Ansprüche, **dadurch gekennzeichnet, dass** der Führungsbereich (31) als Verdrehsicherung und/oder als Stabilisierung dient.

17. Federschamier nach einem der vorhergehenden Ansprüche, **gekennzeichnet durch** eine in das Gehäuse (3) einbringbare Sicke (27) zur Verankerung des Scharnierelements (9) im Gehäuse (3).

18. Federscharnier nach einem der vorhergehenden Ansprüche, **dadurch gekennzeichnet, dass** die Sicke (27) im Boden (35) der Nut vorgesehen ist.

19. Federscharnier nach einem der vorhergehenden Ansprüche, **dadurch gekennzeichnet, dass** das Scharnierelement (9) einen Ring (63) aufweist, der in die Ausnehmung (5) im Gehäuse (3) einbringbar und im Bereich der Sicke (27) anordenbar ist.

20. Federschamier nach einem der vorhergehenden Ansprüche, **dadurch gekennzeichnet, dass** an dem Ring (63) mindestens ein als Lauffläche dienender Materialstreifen (57,59) anbringbar ist, der vorzugsweise senkrecht zur Mittelachse des Rings (63) anordenbar ist.

21. Federschamier nach einem der vorhergehenden Ansprüche, **dadurch gekennzeichnet, dass** die Federeinrichtung (7) mindestens ein Federelement umfasst, das vorzugsweise als Schraubenfeder ausgebildet ist.

22. Federschamier nach einem der vorhergehenden Ansprüche, **dadurch gekennzeichnet, dass** es am Bügel (19) der Brille (17) vorgesehen ist.

23. Federschamier nach einem der vorhergehenden Ansprüche 1 bis 22, **dadurch gekennzeichnet, dass** es am Mittelteil (21) der Brille (17) vorgesehen ist.

24. Federschamier nach einem der vorhergehenden Ansprüche, **dadurch gekennzeichnet, dass** das Gehäuse (3) Teil der Bügel (19) oder des Mittelteils (21) der Brille (17) ist.

25. Federscharnier nach einem der vorhergehenden Ansprüche, **dadurch gekennzeichnet, dass** das Gehäuse (3) auf den Bügeln (19) oder das Mittelteil (21) aufschweißbar ist und vorzugsweise Schweißwarzen umfasst.

## Claims

1. A spring hinge for glasses with a middle part and temples, with a hinge element comprising at least one hinge eyelet, a spring device interacting with said element, with a casing having a recess accommodating at least partially the spring device and the hinge element, with the hinge element being arranged in a displaceable manner within said casing, and with a guiding zone for the hinge element, **characterised by** the following features:
- at least one section of the guiding zone (31) is capable of being arranged outside of the recess (5),
- the hinge element (9) has at least one projection (39) interacting with the guiding zone (31),
- the casing (3) comprises at least one groove (51) formed in its outer surface (33), which groove (51) comprises the sections of the guiding zone (31),
- the projection (39) protrudes over the spring element (7) at least section-wise,
- the projection (39) is arranged outside of the recess (5) and interacts with at least one section of the guiding zone (31) of the casing (3),
- the projection (39) can be arranged in the groove (51) of the casing (3).

2. The spring hinge according to Claim 1, **characterised in that** at least one section of the guiding zone (31) is arranged laterally offset to the spring device (7).

3. The spring hinge according to Claim 1 or 2, **characterised in that** the guiding zone (31) can be realised by a groove formed in the wall of the recess (5).

4. The spring hinge according to any one of the preceding Claims, **characterised in that** at least one section of the guiding zone (31) is arranged at the casing (3).

5. The spring hinge according to any one of the preceding Claims, **characterised in that** the groove (51) substantially runs parallel to the displacement path of the hinge element (9).

6. The spring hinge according to any one of the preceding Claims, **characterised in that** the hinge element (9) has at least one area with at least one section allocated to the guiding zone (31).

7. The spring hinge according to any one of the preceding Claims, **characterised in that** the zone of the hinge element (9) is formed as a projection (39).

8. The spring hinge according to Claim 7, **characterised in that** the projection (39) has a rectangular, square or circular-shaped cross-section.

9. The spring hinge according to any one of the preceding Claims, **characterised in that** the groove (51) encloses the projection (39) on three sides.

10. The spring hinge according to any one of the preceding Claims, **characterised in that** the groove (51) has a U-shaped cross-section.

11. The spring hinge according to any one of the preceding Claims, **characterised in that** the bottom (35) of the groove (51) and/or at least one of the side surfaces (37, 37') of the groove (51) form sections of the guiding zone (31).

12. The spring hinge according to any one of the preceding Claims, **characterised in that** the groove (51) has an outer closing.

13. The spring hinge according to any one of the preceding Claims, **characterised in that** a bead (27) can be covered by the projection (39) of the hinge element (9).

14. The spring hinge according to any one of the preceding Claims, **characterised in that** the guiding zone (31) is separated from the recess (5).

15. The spring hinge according to any one of the preceding Claims, **characterised in that** the guiding zone (31) can be arranged completely outside of the recess (5).

16. The spring hinge according to any one of the preceding Claims, **characterised in that** the guiding zone (31) serves as an anti-twist protection and/or as stabilisation.

17. The spring hinge according to any one of the preceding Claims, **characterised by** a bead (27) that can be inserted into the casing (3) for the purpose of anchoring the hinge element (9) in the casing (3).

18. The spring hinge according to any one of the preceding Claims, **characterised in that** the bead (27) is envisaged in the bottom (35) of the groove.

19. The spring hinge according to any one of the preceding Claims, **characterised in that** the hinge element (9) has a ring (63) that can be inserted in the recess (5) in the casing (3) and can be arranged in the zone of the bead (27).

20. The spring hinge according to any one of the preceding Claims, **characterised in that**, at the ring (63), at least one material strip (57, 59) serving as a running surface can be attached, which can be arranged preferably vertical to the central axis of the ring (63).

21. The spring hinge according to any one of the preceding Claims, **characterised in that** the spring device (7) comprises at least one spring element that is preferably formed as a helical spring.

22. The spring hinge according to any one of the preceding Claims 1 to 22, **characterised in that** it is envisaged at the temple (19) of the glasses (17).

23. The spring hinge according to any one of the preceding Claims, **characterised in that** it is envisaged at the middle part (21) of the glasses (17).

24. The spring hinge according to any one of the preceding Claims, **characterised in that** the casing (3) is part of the temple (19) or the middle part (21) of the glasses (17).

25. The spring hinge according to any one of the preceding Claims, **characterised in that** the casing (3) can be welded onto the temples (19) or the middle part (21) and preferably comprises welding projections.

## Revendications

1. Charnière à ressort pour lunettes avec une partie centrale et des branches, avec un élément de charnière qui comporte au moins un oeil de charnière, un organe à ressort qui coopère avec ce dernier, avec un boîtier qui présente un évidement qui accueille au moins partiellement l'organe à ressort et l'élément de charnière, boîtier au sein duquel l'élément de charnière est disposé de manière mobile, et avec une zone de guidage pour l'élément de charnière, **caractérisée par** les caractéristiques suivantes :
- au moins une partie de la zone de guidage (31) peut être disposée hors de l'évidement,
- l'élément de charnière (9) présente au moins une saillie (39) qui coopère avec la zone de guidage (31),
- le boîtier (3) comporte au moins une rainure (51) réalisée dans sa surface extérieure (33), rainure qui comporte les parties de la zone de guidage (31),
- la saillie (39) dépasse l'élément à ressort (7) au moins sur une zone,
- la saillie (39) est disposée hors de l'évidement (5) et coopère avec au moins une partie de la zone de guidage (31) du boîtier (3),
- la saillie (39) peut être disposée dans la rainure (51) du boîtier (3).

2. Charnière à ressort selon la revendication 1, **caractérisée en ce que** au moins une partie de la zone de guidage (31) est décalée latéralement par rapport à l'organe à ressort (7).

3. Charnière à ressort selon la revendication 1 ou 2, **caractérisée en ce que** la zone de guidage (31) peut être réalisée par un évidement (5) dans la paroi.

4. Charnière à ressort selon l'une quelconque des revendications précédentes, **caractérisée en ce que** au moins une partie de la zone de guidage (31) est disposée sur le boîtier (3).

5. Charnière à ressort selon l'une quelconque des revendications précédentes, **caractérisée en ce que** la rainure (51) s'étend essentiellement parallèlement au trajet de décalage de l'élément de charnière (9).

6. Charnière à ressort selon l'une quelconque des revendications précédentes, **caractérisée en ce que** l'élément de charnière (9) présente au moins une zone avec au moins une partie qui est affectée à la zone de guidage (31).

7. Charnière à ressort selon l'une quelconque des revendications précédentes, **caractérisée en ce que** la zone de l'élément de charnière (9) est formée comme saillie (39).

8. Charnière à ressort selon la revendication 7, **caractérisée en ce que** la saillie (39) présente une section transversale rectangulaire, carrée ou circulaire.

9. Charnière à ressort selon l'une quelconque des revendications précédentes, **caractérisée en ce que** la rainure (51) renferme la saillie (39) sur trois côtés.

10. Charnière à ressort selon l'une quelconque des revendications précédentes, **caractérisée en ce que** la rainure (51) présente une section transversale en forme de U.

11. Charnière à ressort selon l'une quelconque des revendications précédentes, **caractérisée en ce que** le fond (35) de la rainure (51) et/ou au moins une des surfaces latérales (37, 37') de la rainure (51) forment des parties de la zone de guidage (31).

12. Charnière à ressort selon l'une quelconque des revendications précédentes, **caractérisée en ce que** la rainure (51) aboutit à l'extérieur.

13. Charnière à ressort selon l'une quelconque des revendications précédentes, **caractérisée en ce qu'**une nervure (27) peut être recouverte par la saillie (39) de l'élément de charnière (9).

14. Charnière à ressort selon l'une quelconque des revendications précédentes, **caractérisée en ce que** la zone de guidage (31) est séparée de l'évidement (5).

15. Charnière à ressort selon l'une quelconque des revendications précédentes, **caractérisée en ce que** la zone de guidage (31) peut être entièrement disposée hors de l'évidement (5).

16. Charnière à ressort selon l'une quelconque des revendications précédentes, **caractérisée en ce que** la zone de guidage (31) sert de protection contre la torsion et/ou de dispositif de stabilisation.

17. Charnière à ressort selon l'une quelconque des revendications précédentes, **caractérisée par** une nervure (27) pouvant être réalisée dans le boîtier (3) afin de permettre l'ancrage de l'élément de charnière (9) dans le boîtier (3).

18. Charnière à ressort selon l'une quelconque des revendications précédentes, **caractérisée en ce que** la nervure (27) est prévue dans le fond (35) de la rainure.

19. Charnière à ressort selon l'une quelconque des revendications précédentes, **caractérisée en ce que** l'élément de charnière (9) présente une bague (63) qui peut être introduite dans l'évidement (5) dans le boîtier (3) et peut être disposé au niveau de la nervure (27).

20. Charnière à ressort selon l'une quelconque des revendications précédentes, **caractérisée en ce que** au moins une bande de matériau (57, 59) servant de surface de roulement peut être fixée sur la bague (63), bande de matériau pouvant de préférence être disposée perpendiculairement à l'axe central de la bague (63).

21. Charnière à ressort selon l'une quelconque des revendications précédentes, **caractérisée en ce que** l'organe à ressort (7) comporte au moins un élément résilient qui est formé de préférence comme ressort hélicoïdal.

22. Charnière à ressort selon l'une quelconque des revendications précédentes, **caractérisée en ce qu'elle** est prévue sur la branche (19) de la paire de lunettes (17).

23. Charnière à ressort selon l'une quelconque des revendications précédentes 1 à 22, **caractérisée en ce qu'elle** est prévue sur la partie centrale (21) de la paire de lunettes (17).

24. Charnière à ressort selon l'une quelconque des revendications précédentes, **caractérisée en ce que** le boîtier (3) est une partie des branches (19) ou de la partie centrale (21) de la paire de lunettes (17).

25. Charnière à ressort selon l'une quelconque des revendications précédentes, **caractérisée en ce que** le boîtier (3) peut être soudé sur les branches (19) ou la partie centrale (21) et comporte de préférence des bossages de soudage.
